# EUROPÄISCHE PATENTSCHRIFT

(11) **EP 2 216 592 B1**
(45) Veröffentlichungstag und Bekanntmachung des Hinweises auf die Patenterteilung: **14.12.2016**
(21) Anmeldenummer: 10152170.6
(22) Anmeldetag: 29.01.2010
(51) Int. Cl.: F21V 14/00, F21V 5/00, F21V 23/00, F21Y 115/10, F21K 99/00

(54) **Lampe**
Lamp
Lampe

(30) Priorität: 05.02.2009 DE 102009007496
(43) Veröffentlichungstag der Anmeldung: 11.08.2010
(73) Patentinhaber: e:cue control GmbH, 33100 Paderborn (DE)
(72) Erfinder: Van Beeck, Philipp, 33102 Paderborn (DE)
(74) Vertreter: Epping - Hermann - Fischer

(56) Entgegenhaltungen:
- WO-A1-01/59360
- WO-A1-2005/101445
- WO-A1-2005/121641
- WO-A1-2007/080543
- WO-A1-2007/122544

## Beschreibung

Es wird eine Lampe angegeben. Die Druckschriften WO 2005/121641 und WO 2007/122544 beschreiben jeweils Lampen. Die Druckschrift WO 2005/101445 beschreibt eine elektrisch kontrollierbare Farbkonversionszelle.

Eine zu lösende Aufgabe besteht darin, eine Lampe anzugeben, die besonders vielseitig einsetzbar ist. Diese Aufgabe wird gelöst durch eine Lampe mit einer Vielzahl von Leuchtdioden, wobei jeder Leuchtdiode zumindest ein fokussierendes optisches Element nachgeordnet ist, einem elektrisch einstellbaren Diffuser, der dem zumindest einen fokussierenden optischen Element in einer Hauptabstrahlrichtung der Leuchtdioden nachgeordnet ist, und mit einer Steuervorrichtung, die mit dem Diffuser verbunden ist, mittels der die Lichtstreuwirkung des Diffusers einstellbar ist, wobei jeder Leuchtdiode ein fokussierendes optisches Element ein-eindeutig zugeordnet ist,
dadurch gekennzeichnet, dass allen Leuchtdioden eine Sammellinse als gemeinsames fokussierendes optisches Element nachgeordnet ist, wobei in der Hauptabstrahlrichtung der Leuchtdioden das ein-eindeutig zugeordnete optische Element der zugeordneten Leuchtdiode direkt nachfolgt, das gemeinsame fokussierende optische Element dem ein-eindeutig zugeordneten optischen Element direkt nachfolgt und dem gemeinsamen fokussierenden optischen Element der elektrisch einstellbare Diffuser direkt nachfolgt.

Bei der Lampe handelt es sich beispielsweise um eine Lampe zur Gebäudeinnen- oder -außenbeleuchtung.

Die Lampe umfasst eine Vielzahl von Leuchtdioden, welche die Lichtquellen der Lampe bilden. Bei den Leuchtdioden handelt es sich beispielsweise um RGB-Leuchtdioden, die zumindest einen Halbleiterchip, der Licht im roten Spektralbereich, einen Halbleiterchip, der Licht im grünen Spektralbereich und einen Halbleiterchip umfassen, der Licht im blauen Spektralbereich emittiert.

Dabei ist jeder Leuchtdiode der Lampe ein fokussierendes optisches Element nachgeordnet. Nachgeordnet heißt in diesem Zusammenhang, dass im Wesentlichen das gesamte von der Leuchtdiode emittierte Licht durch das optische Element tritt. "Im Wesentlichen" heißt dabei, dass zumindest 90 % des von der Leuchtdiode emittierten Lichts durch das optische Element tritt.

Der Lichtkegel des von den Leuchtdioden im Betrieb der Lampe emittierten Lichts wird durch das fokussierende optische Element in seiner Breite verringert. Das heißt, bei einer vorgegebenen zu beleuchtenden Fläche, trifft bei einer Leuchtdiode mit dem fokussierenden optischen Element das Licht der Leuchtdiode auf einen kleineren Flächenanteil auf, als dies ohne das fokussierende optische Element der Fall wäre.

Die Lampe umfasst einen elektrisch einstellbaren Diffuser, der dem fokussierenden optischen Element in der Hauptabstrahlrichtung der Leuchtdioden nachgeordnet ist. "Nachgeordnet" heißt dabei, dass das durch das optische Element oder die optischen Elemente fokussierte Licht der Leuchtdioden auf den Diffuser trifft und durch diesen tritt.

Vorzugsweise trifft zumindest 85 % des von den Leuchtdioden im Betrieb erzeugten Lichts auf den Diffuser.

Bei dem Diffuser handelt es sich um einen elektrisch einstellbaren Diffuser. Das heißt, die Lichtstreuwirkung des Diffusers kann zum Beispiel durch das Anlegen einer äußeren elektrischen Spannung verändert werden. Der Diffuser weist zumindest einen Betriebszustand auf, in den er transparent für das durchtretende Licht ist. In diesem Fall weist der Diffuser keine oder kaum Lichtstreuwirkung auf. Der Diffuser kann zumindest einen zweiten Betriebszustand aufweisen, in dem er eine hohe Lichtstreuwirkung ähnlich einer Milchglasscheibe aufweist. Ferner ist es möglich, dass der Diffuser zumindest einen Zwischenzustand in seiner Lichtstreuwirkung aufweist. Das heißt, die Lichtstreuwirkung des Diffusers kann - beispielsweise über die Höhe der angelegten Spannung - in Stufen oder stufenlos veränderbar sein.

Die Lampe umfasst eine Steuervorrichtung, die mit dem Diffuser verbunden ist. Mittels der Steuervorrichtung kann die Lichtstreuwirkung des Diffusers eingestellt werden. Die Steuervorrichtung ändert beispielsweise eine Spannung, die am elektrisch einstellbaren Diffuser anliegt und stellt auf diese Weise die Lichtstreuwirkung des Diffusers ein. Die Einstellung der Lichtstreuwirkung kann dabei in Abhängigkeit von äußeren Eingaben erfolgen, die beispielsweise durch eine Hauptsteuervorrichtung oder einen Benutzer in die Steuervorrichtung eingegeben werden.

Im einfachsten Fall kann durch die Steuervorrichtung die Lichtstreuwirkung des Diffusers von transparent auf maximal streuend geschaltet werden. Ferner ist es möglich, dass durch die Steuervorrichtung die Lichtstreuwirkung des Diffusers in zumindest zwei, also in mehreren Stufen von transparent zu maximal Licht streuend verändert werden kann.

Die Komponenten der Lampe, also die Leuchtdioden, die optischen Elemente, der Diffuser und die Steuervorrichtung sind zu einer Lampe zusammengefasst. Das heißt, die Komponenten sind zum Beispiel auf einem gemeinsamen Träger angeordnet und/oder in einem gemeinsamen Lampen-Gehäuse angeordnet.

Die hier beschriebene Lampe macht dabei unter anderem von der folgenden Idee Gebrauch: Lampen werden üblicherweise in zwei Typen unterschieden: Eine Lampe kann ein "Spot" sein, bei dem das erzeugte Licht auf eine eng umrissene Fläche fokussiert wird. Eine andere Lampe kann ein so genannter "Washer" sein, mittels dem ein Raum möglichst gleichmäßig ausgeleuchtet wird.

Die Kombination von Leuchtdioden mit einem fokussierenden optischen Element, welche die "Spot"-Funktion wahrnehmen und einem elektrisch einstellbaren Diffuser, mittels der eine "Washer"-Funktion der Lampe eingestellt werden kann, erlaubt die Vereinigung der beiden Lampentypen in einer einzigen Lampe. Darüber hinaus ist es mit der vorgestellten Lampe nun möglich, Zwischenzustände zwischen den beiden Lampenfunktionen zu wählen. Dazu wird am elektrisch schaltbaren Diffuser eine Lichtstreuwirkung eingestellt, die zwischen der des transparenten Diffusers und des maximal Licht streuenden Diffuser liegt.

Ferner kann der Diffuser im Licht streuenden Zustand eine homogene Mischung des von den Leuchtdioden erzeugten Lichts bewirken. Auf diese Weise kann zum Beispiel eine homogene Mischung der Lichtaustrittsfarbe bei Verwendung von Einzelfarben-LEDs erfolgen.

Ein solcher Diffuser kann zum Beispiel mit Flüssigkristallen realisiert sein, an die eine äußere Spannung angelegt wird. Das heißt, zwischen zwei transparenten Elektroden ist zumindest eine Schicht aus Flüssigkristallen angeordnet. Durch Anlegen einer elektrischen Spannung an die Elektroden können die ungeordnet verteilten Flüssigkristalle ausgerichtet werden. Während die ungeordneten Flüssigkristalle auf sie auftreffendes Licht diffus streuen, kann die Strahlung ungehindert passieren, wenn die Flüssigkristalle gleichmäßig ausgerichtet sind.
Dadurch wird der Diffusor für das auf ihn treffende Licht transparent.

Mit anderen Worten ist es mittels der Steuervorrichtung möglich, die Breite des Lichtkegels des von der Lampe im Betrieb emittierten Lichts einzustellen. Je stärker der einstellbare Diffuser das durchtretende Licht streut, desto breiter wird der Lichtkegel des von der Lampe im Betrieb emittierten Lichts. Der Lichtkegel der Lampe ist zum Beispiel dadurch definiert, dass am Rand des Lichtkegels die Intensität des von der Lampe emittierten Lichts auf 30 % der maximalen Intensität des von der Lampe emittierten Lichts abgefallen ist. Außerhalb des Lichtkegels ist die Intensität des von der Lampe emittierten Lichts dann kleiner als 30 % der maximalen Intensität des von der Lampe emittierten Lichts.

Gemäß zumindest einer Ausführungsform ist der Diffuser als Folie ausgebildet. Bei dem Diffuser handelt es sich dann um eine elektrisch einstellbare Diffusionsfolie. Diese Folie kann beispielsweise direkt auf eine transparente Abdeckscheibe der Lampe, welche sämtlichen Leuchtdioden nachgeordnet ist, aufgeklebt werden.

Zum Beispiel kann die Folie dadurch realisiert werden, dass transparente Elektroden - zum Beispiel aus einem TCO (transparent conductive oxide) - Material wie ITO auf eine Kunststofffolie, die den Träger für die jeweilige Elektrode bildet, aufgebracht - zum Beispiel aufgedampft - werden. Zwischen diesen Elektroden wird dann eine Schicht mit Flüssigkristallen angeordnet.

Allen Leuchtdioden der Lampe ist ein gemeinsames fokussierendes optisches Element nachgeordnet. Das heißt, das Licht aller Leuchtdioden tritt durch ein gemeinsames fokussierendes optisches Element. Dabei tragen die Leuchtdioden selbst noch ein zusätzliches, fokussierendes optisches Element, das jeder Leuchtdiode ein-eindeutig zugeordnet ist. Bei diesem fokussierenden optischen Element handelt es sich um einen Verguss für die Leuchtdiodenchips der Leuchtdiode, der eine linsenartig gekrümmte Außenfläche aufweist. Bei dem gemeinsamen fokussierenden optischen Element handelt es sich um eine Sammellinse.

In der Hauptabstrahlrichtung der Leuchtdioden folgt das ein-eindeutig zugeordnete optische Element der zugeordneten Leuchtdiode direkt nach, das gemeinsame fokussierende optische Element folgt dem ein-eindeutig zugeordneten optischen Element direkt nach und dem gemeinsamen fokussierenden optischen Element folgt der elektrisch einstellbare Diffuser direkt nach. "Direkt" nachfolgen heißt dabei insbesondere, dass keine weiteren optischen Elemente zwischen den Komponenten angeordnet sind. Entweder befinden sich die Komponenten dann in direktem Kontakt miteinander oder es ist ein Gas wie Luft zwischen ihnen angeordnet.

Gemäß zumindest einer Ausführungsform der Lampe umfasst die Lampe einen Anschlussträger. Bei dem Anschlussträger handelt es sich beispielsweise um eine Leiterplatte mit einem elektrisch isolierenden Grundkörper, auf dem oder in dem Anschlussstellen und Leiterbahnen für die Leuchtdioden strukturiert sind. Beispielsweise kann es sich bei dem Anschlussträger um eine Metallkernplatine oder eine bedruckte Leiterplatte mit einem Kunststoffgrundkörper handeln. Vorzugsweise sind die Leuchtdioden auf einer Oberseite des Anschlussträgers angeordnet. Sie sind dort auf Anschlussstellen des Anschlussträgers befestigt und mittels Leiterbahnen elektrisch kontaktierbar.

Gemäß zumindest einer Ausführungsform der Lampe ist die Steuervorrichtung für den Diffuser auf der der Oberseite gegenüberliegenden Unterseite des Anschlussträgers angeordnet. Dies ermöglicht einen besonders Platz sparenden Aufbau der Lampe. Zu diesem Zweck weist der Anschlussträger vorzugsweise sowohl auf seiner Oberseite als auch auf seiner Unterseite Anschlussstellen und Leiterbahnen auf. Ferner kann der Anschlussträger eine Durchkontaktierung aufweisen, mittels der die Anschlussstellen und Leiterbahnen auf den beiden unterschiedlichen Seiten des Anschlussträgers elektrisch leitend miteinander verbunden sind. Auf der Unterseite des Anschlussträgers können dann weitere elektronische Komponenten, zum Beispiel zum Ansteuern der Leuchtdioden, angeordnet sein.

Gemäß zumindest einer Ausführungsform der Lampe umfasst die Lampe eine Vielzahl von Leuchtdioden, die jeweils eine Leistungsaufnahme von wenigstens 1 Watt, vorzugsweise von wenigstens 3 Watt haben. Zum Beispiel kommen 18 oder mehr solche Leuchtdioden in der Lampe zur Anwendung. Auf diese Weise eignet sich die Lampe besonders gut zur Allgemeinbeleuchtung.

Im Folgenden wird die hier beschriebene Lampe anhand von Ausführungsbeispielen und den zugehörigen Figuren näher erläutert.
- Die Figur 1: zeigt ein erstes Ausführungsbeispiel einer hier beschriebenen Lampe anhand einer schematischen Schnittdarstellung.
- Die Figur 2: zeigt ein zweites Ausführungsbeispiel einer hier beschriebenen Lampe anhand einer schematischen Schnittdarstellung.
- Anhand der Figur 3: ist die Funktionsweise des Diffusers anhand einer schematischen Schnittdarstellung einer hier beschriebenen Lampe näher erläutert.

In den Ausführungsbeispielen und Figuren sind gleiche oder gleich wirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

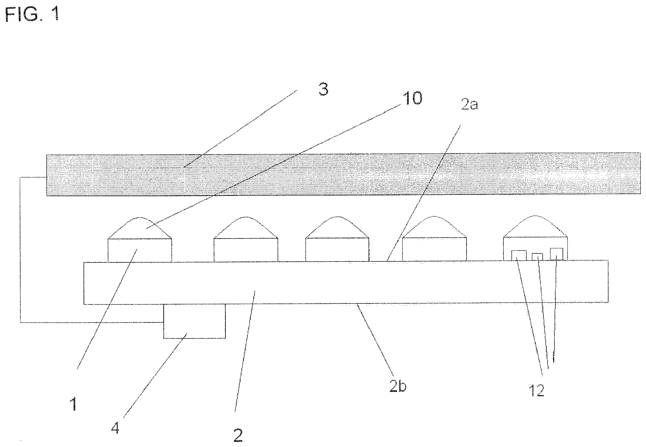

Die Figur 1 zeigt ein erstes Ausführungsbeispiel einer hier beschriebenen Lampe anhand einer schematischen Schnittdarstellung. Die Lampe umfasst eine Vielzahl von Leuchtdioden 1. Jeder Leuchtdiode 1 ist in Abstrahlrichtung ein fokussierendes optisches Element 10 nachgeordnet, bei dem es sich um einen linsenartig ausgeformten Verguss für die Leuchtdiodenchips 12 der Leuchtdiode 1 handelt. Jede Leuchtdiode umfasst beispielsweise drei Leuchtdiodenchips 12, die zum Beispiel rotes, blaues und grünes Licht emittieren.

Die Leuchtdioden 1 sind auf einem Anschlussträger 2 aufgebracht, bei dem es sich beispielsweise um eine großflächige Leiterplatte handeln kann, die an ihrer Oberseite 2a und ihrer Unterseite 2b mit Leiterbahnen und Anschlussstellen (jeweils nicht gezeigt) bedruckt ist. Auf dem Anschlussträger können beispielsweise 18 oder mehr, zum Beispiel 64, Leuchtdioden 1 angeordnet sein.

Auf der Unterseite 2b des Anschlussträgers befindet sich zumindest eine Steuervorrichtung 4, die elektrisch leitend mit einem elektrisch schaltbaren Diffuser 3 verbunden ist. Bei dem elektrisch schaltbaren Diffuser 3 handelt es sich um eine elektrisch schaltbare Diffuserfolie.

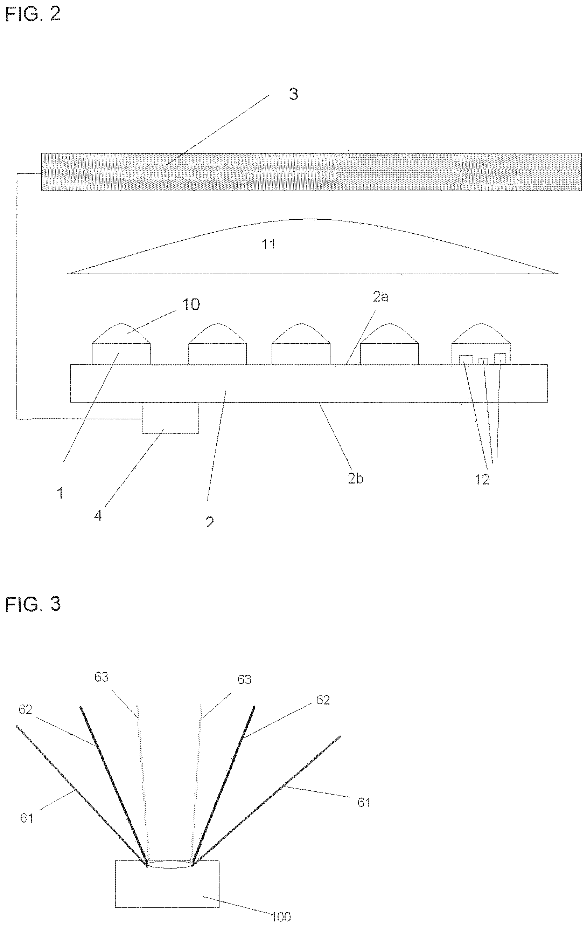

Im Betrieb der Lampe wird nun zunächst das von den Leuchtdioden 1 erzeugte Licht durch das fokussierende optische Element 10 einer jeden Leuchtdiode fokussiert. Ist der elektrisch schaltbare Diffuser 3 auf transparent geschaltet, so weist die Lampe einen Lichtkegel 63 geringer Breite auf (siehe dazu die Figur 3). Über beispielsweise die Veränderung der Spannung, die am elektrisch schaltbaren Diffuser 3 anliegt, kann die Breite des Lichtkegels vergrößert werden. Die größte Breite ergibt sich für den Lichtkegel 61, bei dem der Diffuser seine maximale Lichtstreuwirkung erreicht hat. Bei Zwischenzuständen kann sich beispielsweise ein Lichtkegel 62 ergeben, der eine größere Breite als der Lichtkegel 63 und eine geringere Breite als der Lichtkegel 61 aufweist.

In Verbindung mit der Figur 2 ist ein weiteres Ausführungsbeispiel einer hier beschriebenen Lampe näher erläutert. In diesem Ausführungsbeispiel ist den Leuchtdioden 1 mit ihren fokussierenden optischen Elementen 10 ein gemeinsames, fokussierendes optisches Element 11 nachgeordnet. Bei diesem fokussierenden optischen Element handelt es sich um eine Sammellinse, die auch als Fresnel-Linse ausgeführt sein kann. Mittels dem weiteren optischen Element 11 ist es möglich, das von den Leuchtdioden 1 erzeugte Licht noch stärker zu bündeln, und damit - im Falle eines transparenten Diffusers - einen Lichtkegel zu erzeugen, der eine besonders geringe Breite aufweist.

Die vorgeschlagene Lampe kann beispielsweise zur Raumbeleuchtung Verwendung finden. Sie kann einen Betriebszustand aufweisen, in dem sie als Leselampe Verwendung finden kann, wobei ihr Licht auf eine besonders kleine Fläche fokussiert ist. Durch Erhöhung der Lichtstreuwirkung des Diffusers kann die Lampe von der Leselampe zur Raumleuchte umgeschaltet werden, die einen Raum besonders gleichmäßig ausleuchtet.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

Diese Patentanmeldung beansprucht die Priorität der deutschen Patentanmeldung 1020090074961..

## Patentansprüche

1. Lampe (100) mit
- einer Vielzahl von Leuchtdioden (1), wobei jeder Leuchtdiode (1) zumindest ein fokussierendes optisches Element (10, 11) nachgeordnet ist,
- einem elektrisch einstellbaren Diffuser (3), der dem zumindest einen fokussierenden optischen Element (10, 11) in einer Hauptabstrahlrichtung der Leuchtdioden (1) nachgeordnet ist, und
- einer Steuervorrichtung (4), die mit dem Diffuser (3) verbunden ist, mittels der die Lichtstreuwirkung des Diffusers (3) einstellbar ist, wobei
- jeder Leuchtdiode (1) ein fokussierendes optisches Element (10) ein-eindeutig zugeordnet ist,
**dadurch gekennzeichnet, dass**
- allen Leuchtdioden (1) eine Sammellinse als gemeinsames fokussierendes optisches Element (11) nachgeordnet ist, wobei in der Hauptabstrahlrichtung der Leuchtdioden (1) das ein-eindeutig zugeordnete optische Element (10) der zugeordneten Leuchtdiode (1) direkt nachfolgt, das gemeinsame fokussierende optische Element (11) dem ein-eindeutig zugeordneten optischen Element (10) direkt nachfolgt und dem gemeinsamen fokussierenden optischen Element (11) der elektrisch einstellbare Diffuser (3) direkt nachfolgt.

2. Lampe gemäß dem vorherigen Anspruch,
bei der die Lichtstreuwirkung des Diffusers (3) stufenlos veränderbar ist.

3. Lampe gemäß einem der vorherigen Ansprüche,
bei der mittels der Steuervorrichtung (4) die Breite des Lichtkegels (61, 62, 63) des von der Lampe (100) im Betrieb emittierten Lichts einstellbar ist.

4. Lampe gemäß einem der vorherigen Ansprüche,
bei der der Diffuser (3) als Folie ausgebildet ist.

5. Lampe gemäß einem der vorherigen Ansprüche mit einem Anschlussträger (2),
bei der die Leuchtdioden (1) auf einer Oberseite (2a) eines Anschlussträgers (2) angeordnet sind.

6. Lampe gemäß dem vorherigen Anspruch,
bei der die Steuervorrichtung (4) für den Diffuser (3) auf der der Oberseite (2a) gegenüberliegenden Unterseite (2b) des Anschlussträgers (2) angeordnet ist.

7. Lampe gemäß einem der vorherigen Ansprüche,
bei der jede der Leuchtdioden (1) zumindest drei Leuchtdiodenchips (12) umfasst, deren Licht sich zu weißem Licht mischen kann.

8. Lampe gemäß einem der vorherigen Ansprüche,
bei der jede der Leuchtdioden (1) eine Leistungsaufnahme von wenigstens 1 Watt aufweist.

9. Lampe gemäß einem der vorherigen Ansprüche mit wenigstens 18 Leuchtdioden, die jeweils eine Leistungsaufnahme von wenigstens 1 Watt aufweisen.

## Claims

1. Lamp (100) comprising
- a multiplicity of light-emitting diodes (1), wherein at least one focussing optical element (10, 11) is disposed downstream of each light-emitting diode (1),
- an electrically adjustable diffuser (3) disposed downstream of the at least one focussing optical element (10, 11) in a main emission direction of the light-emitting diodes (1), and
- a control device (4) connected to the diffuser (3), by means of which the light scattering effect of the diffuser (3) is adjustable, wherein
- a focussing optical element (10) is assigned one-to-one to each light-emitting diode (1),
**characterized in that**
- a converging lens as a common focussing optical element (11) is disposed downstream of all the light-emitting diodes (1), wherein in the main emission direction of the light-emitting diodes (1) the optical element (10) assigned one-to-one directly succeeds the assigned light-emitting diode (1), the common focussing optical element (11) directly succeeds the optical element (10) assigned one-to-one and the electrically adjustable diffuser (3) directly succeeds the common focussing optical element (11).

2. Lamp according to the preceding claim,
wherein the light scattering effect of the diffuser (3) is changeable in a continuously variable manner.

3. Lamp according to either of the preceding claims,
wherein the width of the light cone (61, 62, 63) of the light emitted by the lamp (100) during operation is adjustable by means of the control device (4).

4. Lamp according to any of the preceding claims,
wherein the diffuser (3) is embodied as a film.

5. Lamp according to any of the preceding claims comprising a connection carrier (2),
wherein the light-emitting diodes (1) are arranged on a top side (2a) of a connection carrier (2).

6. Lamp according to the preceding claim,
wherein the control device (4) for the diffuser (3) is arranged on the underside (2b) of the connection carrier (2), situated opposite the top side (2a).

7. Lamp according to any of the preceding claims,
wherein each of the light-emitting diodes (1) comprises at least three light-emitting diode chips (12), the light of which can mix to form white light.

8. Lamp according to any of the preceding claims,
wherein each of the light-emitting diodes (1) has a power consumption of at least one watt.

9. Lamp according to any of the preceding claims comprising at least 18 light-emitting diodes each having a power consumption of at least 1 watt.

## Revendications

1. Lampe (100) comportant
- une pluralité de diodes électroluminescentes (1), dans laquelle chaque diode électroluminescente (1) est disposée en aval d'au moins un élément optique de focalisation (10, 11),
- un diffuseur réglable électriquement (3), qui est disposé en aval de l'au moins un élément optique de focalisation (10, 11) dans une direction de rayonnement principale des diodes électroluminescentes (1), et
- un dispositif de commande (4), qui est relié au diffuseur (3), au moyen duquel l'effet de diffusion lumineuse du diffuseur (3) peut être réglé, dans laquelle
- un élément optique de focalisation (10) est associé de manière unique à chaque diode électroluminescente (1), **caractérisé en ce qu'**une lentille convergente est disposée en aval de toutes les diodes électroluminescentes (1) en tant qu'élément optique de focalisation commun (11), dans laquelle l'élément optique (10) associé de manière unique aux diodes électroluminescentes (1) est disposé directement en aval de la diode électroluminescente associée (1) dans la direction de rayonnement principale, l'élément optique de focalisation commun (11) est disposé directement en aval d'un élément optique associé de manière unique (10) et le diffuseur réglable électriquement (3) est disposé directement en aval de l'élément optique de focalisation commun (11).

2. Lampe selon la revendication précédente,
dans laquelle l'effet de diffusion lumineuse du diffuseur (3) est modifiable par pas successifs.

3. Lampe selon l'une quelconque des revendications précédentes,
dans laquelle la largeur du cône de lumière (61, 62, 63) de la lumière émise par la lampe (100) lors de son fonctionnement est réglable au moyen du dispositif de commande (4).

4. Lampe selon l'une quelconque des revendications précédentes,
dans laquelle le diffuseur (3) est réalisé sous la forme d'un film.

5. Lampe selon l'une quelconque des revendications précédentes, comportant un support de connexion (2),
dans laquelle les diodes électroluminescentes (1) sont disposées sur la face supérieure (2a) d'un support de connexion (2).

6. Lampe selon la revendication précédente,
dans laquelle le dispositif de commande (4) destiné au diffuseur (3) est disposé sur la face inférieure (2b) du support de connexion (2) qui est opposée à la face supérieure (2a).

7. Lampe selon l'une quelconque des revendications précédentes,
dans laquelle chacune des diodes électroluminescentes (1) comprend au moins trois puces de diodes électroluminescentes (12) dont les lumières peuvent se mélanger en lumière blanche.

8. Lampe selon l'une quelconque des revendications précédentes,
dans laquelle chacune des diodes électroluminescentes (1) présente une consommation de puissance d'au moins 1 watt.

9. Lampe selon l'une quelconque des revendications précédentes, comportant 18 diodes électroluminescentes qui présentent respectivement une consommation de puissance d'au moins 1 watt.
